# EUROPEAN PATENT SPECIFICATION

(11) **EP 4 188 802 B1**
(45) Date of publication and mention of the grant of the patent: **11.09.2024**
(21) Application number: 21762531.8
(22) Date of filing: 02.08.2021
(51) Int. Cl.: B64D 33/04

(54) **MULTILAYER TUBULAR DUCT AND MANUFACTURING METHOD**
MEHRSCHICHTIGE ROHRKANAL UND HERSTELLUNGSVERFAHREN
CONDUIT TUBULAIRE MULTICOUCHE ET PROCÉDÉ DE FABRICATION

(30) Priority: 31.07.2020 IT 202000018757
(43) Date of publication of application: 07.06.2023
(73) Proprietor: Aeronautical Service S.r.l., 00054 Fiumicino (RM) (IT)
(72) Inventor: BORDIGNON, Cristiano, 00054 FIUMICINO (RM) (IT)
(74) Representative: Santi, Filippo
(86) International application number: PCT/IT2021/050239
(87) International publication number: WO 2022/024161

(56) References cited:
- EP-A1- 2 703 614
- EP-B1- 2 703 614
- US-A- 5 376 598
- US-A1- 2009 183 502

## Description

### Technical field

This invention relates to a multilayer tubular duct and in particular a multilayer tubular duct made of composite material.

More in detail, the invention relates to a so-called Bleed Air Duct, that is to say, a tubular duct shaped for the passage of high temperature pressurised fluids from the exhaust of the engines of an aircraft, and its manufacturing method.

### Background art

According to the prior art, the pipes which conduct the hot air under pressure bled from the engines on board aircraft are made of metal, for example titanium alloy or high-strength steel.

The drawbacks of pipes made of metal material are:
- the weight, which is excessive for the specific application on aircraft;
- their possible deformability, due to the thickness which is generally between 0.5 mm and 0.9 mm;
- the presence of welding points due to the assembly of the pipe itself, which is achieved by welding two or more parts together. The welding becomes a weak point of the metal duct, due to the deformations of the interfaces to be welded, and becomes the starting point of possible fracture cracks.

A possible alternative solution according to the prior art provides for the manufacturing of the ducts in composite material by means of pre-impregnated material with an epoxy or cyanate ester or phenolic matrix, but these materials are not suitable for the specific application for Air Bleed Ducts, due to the loss of chemical properties/physical at high temperature values.

Examples of bleed ducts and methods for manufacturing bleed ducts according to the prior art are disclosed in EP2703614A1 ,

US2009/183502A1 and US5376598A. Document EP2703614A1 relates to a composite exhaust element for use in an exhaust system of a motor vehicle. The exhaust element comprises an outer shell made of a composite material and an inner thermal protection. The inner thermal protection comprises a layer of high temperature insulation material and an inner liner for abrasion protection of the high temperature insulation material. The inner liner is a high temperature resistant textile.

### Disclosure of the invention

For this reason, the technical problem raised and resolved by the invention is that of providing a tubular duct and a method for making the duct itself which allows the above-mentioned drawbacks of the prior art to be overcome.

This problem is solved by a multilayer duct, according to claim 1 and, according to the same inventive concept, by a method according to claim 10.

Preferred features of the invention are present in the dependent claims.

The invention provides some significant advantages.

Advantageously, the invention allows the manufacture of tubular ducts, both linear and curved, substantially without welds and therefore without weakening points, thus ensuring a continuity and uniformity of the structural resistance along the entire longitudinal extension of the duct.

In particular, the characteristic of having an inner thermal insulating layer resistant to the high operating temperature values of a Bleed Air Duct guarantees that the chemical/physical resistance of the surfaces in contact with the air coming out of the engines of an aircraft (which has a temperature greater than or equal to 200°C) remains unchanged during use and allows an increase in the useful life cycle of the duct itself.

The presence of an outer layer configured to structurally resist the external mechanical stresses allows the tubular shape of the duct to be maintained even when it is subjected to considerable stress due to the high pressure of the fluids passing through the duct itself.

Advantageously, the invention also has an intermediate layer, positioned between the inner layer and the outer layer, to ensure a chemical/physical insulation between the two above-mentioned layers, and to maintain the characteristics of the materials used unaltered, during storage and use of the multilayer tubular duct.

Again, advantageously, the invention allows, for the same structural strength, to considerably reduce the overall weight of a duct of the Air Bleed Duct type with respect to the construction in metallic material.

Other advantages, features and the means of use of the invention will become clear from the following detailed description of some embodiments, provided by way of example and without limiting the scope of the invention.

### Brief description of the drawings

Reference is made to the accompanying drawings, in which:
Figure 1 shows a perspective view of a partially sectioned portion of an embodiment of a multilayer tubular duct according to the invention;
Figure 2 shows a top perspective view of a preferred embodiment of the multilayer tubular duct according to the present invention;
Figures 3a-3c show the steps for making an inner layer of a first embodiment of the tubular duct according to the invention;
Figures 4a-4b show the steps for making the outer layer of a first embodiment of the tubular duct according to the invention;
Figures 5a-5b show the steps for making an inner layer of a second embodiment of the tubular duct according to the invention;
Figure 6 shows a step of making a portion of the outer layer of a second embodiment of the tubular duct according to the invention;
Figure 6a shows a partial enlargement of Figure 6;
Figure 7 shows a mould for making a second embodiment of the tubular duct according to the invention;
Figure 7a shows a partial enlargement of Figure 7;
Figure 8 shows a partial perspective view of the second embodiment of the tubular duct according to the invention;
Figure 8a shows a partial enlargement of Figure 8;
Figure 9 shows a stiffening element of the second embodiment of the tubular duct according to the invention;
Figure 10 shows a perspective view of the second embodiment of the tubular duct according to the invention in a partially assembled configuration;
Figure 10a shows a partial enlargement of Figure 10;
Figure 11 shows a perspective view of the second embodiment of the tubular duct according to the invention in an assembled configuration;
Figure 11a shows a partial enlargement of Figure 11;
Figure 12 shows a graph resulting from a thermal performance verification test of an embodiment of the duct according to the invention;
Figure 13 shows a graph resulting from a thermal performance verification test of a further embodiment of the duct according to the invention.

### Detailed description of preferred embodiments

The following description refers to a multilayer tubular duct, in particular configured for the passage of high-temperature pressurised fluids leaving the engines of an aircraft, and to the method of manufacturing the tubular duct itself.

With reference to the drawings, a first embodiment and a second embodiment of the multilayer tubular duct according to the invention are generally denoted, respectively, with 100 and 200.

The multilayer tubular duct 100, 200 according to the invention comprises an inner layer 10 which, as will be described in more detail below, is made in the form of a pre-impregnated semi-finished product.

In particular, the inner layer 10, made of composite material, comprises at least a carbon fiber fabric as reinforcement, and an inorganic-based matrix, for example ceramic-based.

Advantageously, the specific combination of carbon fiber fabric used as reinforcement, and an inorganic-based matrix, in particular ceramic-based, allows the manufacture of an inner pre-impregnated layer 10 characterised in that it allows a thermal absorption, between two faces, that is, between an inner face and an outer face, of the layer itself of approximately 80°C for 1 mm of thickness.

Preferably, the inner layer 10 provides a superposing of four carbon fiber fabrics, superposing one another in the direction of the thickness of the pipe.

In the example described here, each fabric has a basic weight equal to 200 gr/m².

This weight guarantees an optimal workability and impregnation of the carbon fiber fabric with the ceramic-based resin and allows a pre-impregnated fabric thickness of approximately 0.25 mm to be obtained.

For this reason, the overall thickness of the inner layer 10, comprising a superposing of four carbon fiber fabrics, is approximately 1 mm.

Alternatively, the inner layer 10 can comprise a single layer of carbon fiber fabric having a basic weight of approximately 800 gr/m² and a thickness of approximately 1 mm.

According to a further alternative embodiment, the inner layer 10 can comprise a single layer of non-woven carbon fiber fabric having a basic weight equal to approximately 400 gr/m² which, once impregnated, develops a thickness of 1 mm.

According to the preferred embodiment, the inorganic-based matrix is a ceramic-based resin of the type developed by the same applicant and described in international patent application WO2018179019.

Advantageously, the ceramic-based resin used has a Tg (glass transition temperature) of 900°C and can withstand a fire temperature of up to 1200°C, in accordance with the provisions of ISO 2685.

The thermal stability of the ceramic-based resin developed by the applicant was tested over the operating temperature range and proved to be resistant.

For this reason, the inner layer 10 thus configured acts as an insulator, that is, as a thermal insulator, thanks to the porous structure of the ceramic-based matrix which is unalterable in a temperature range of between -55°C and 310°C, and complies with the aeronautical FTS regulations.

Advantageously, each pre-impregnated layer, obtained by means of a carbon fiber fabric with a basic weight of 200 gr/m² and a thickness of about 0.25 mm, allows a thermal insulation between one face and the other, allowing in particular a thermal absorption of about 15 -20°C.

For this reason, the overall thickness of the pre-impregnated inner layer 10, comprising a superposing of four carbon fiber fabrics, allows a thermal absorption to be obtained, between an inner face and an outer face of the layer of about 80°C.

The value of the thermal absorption between the inner face and the outer face of the pre-impregnated inner layer 10 can be increased as the number of superposed carbon fiber fabrics increases.

As mentioned above, according to an alternative embodiment, a thermal absorption value of about 80°C, between an inner face and an outer face of the pre-impregnated inner layer 10, can be obtained by using a single layer of carbon fiber fabric having a basic weight of approximately 800 gr/m² and a thickness of approximately 1 mm, or through the use of a single layer of non-woven carbon fiber fabric having a basic weight of approximately 400 gr/m ² which once impregnated develops a thickness of 1 mm.

The pre-impregnated inner layer 10 according to the invention has a tubular shape and has at least two edges 10a and 10b, substantially parallel to each other, superposing or at least partially superposing along a longitudinal direction of the tubular surface.

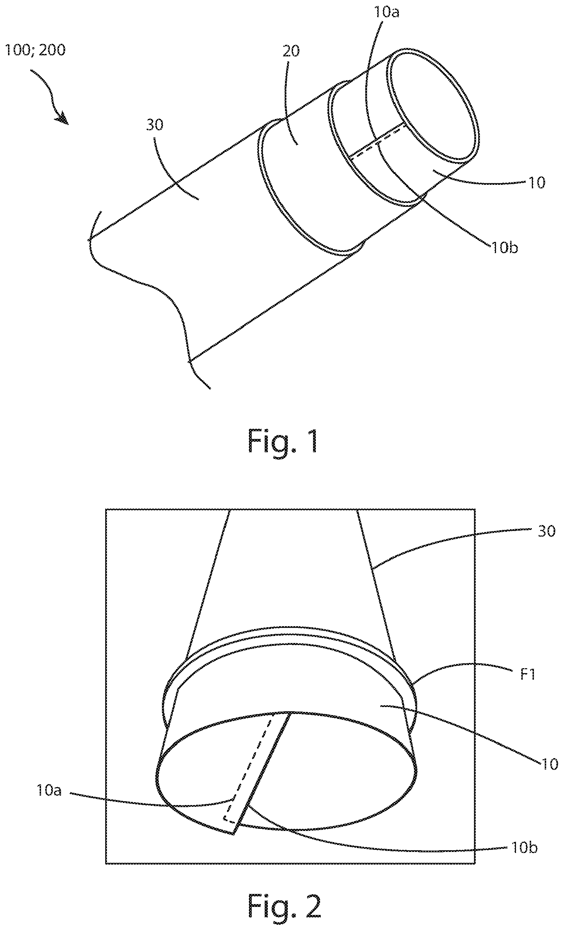

In particular, as shown in Figure 2, according to the first embodiment of the duct 100 according to the invention, the two edges 10a and 10b are preferably superimposed so as to form a cylinder having a substantially constant diameter value.

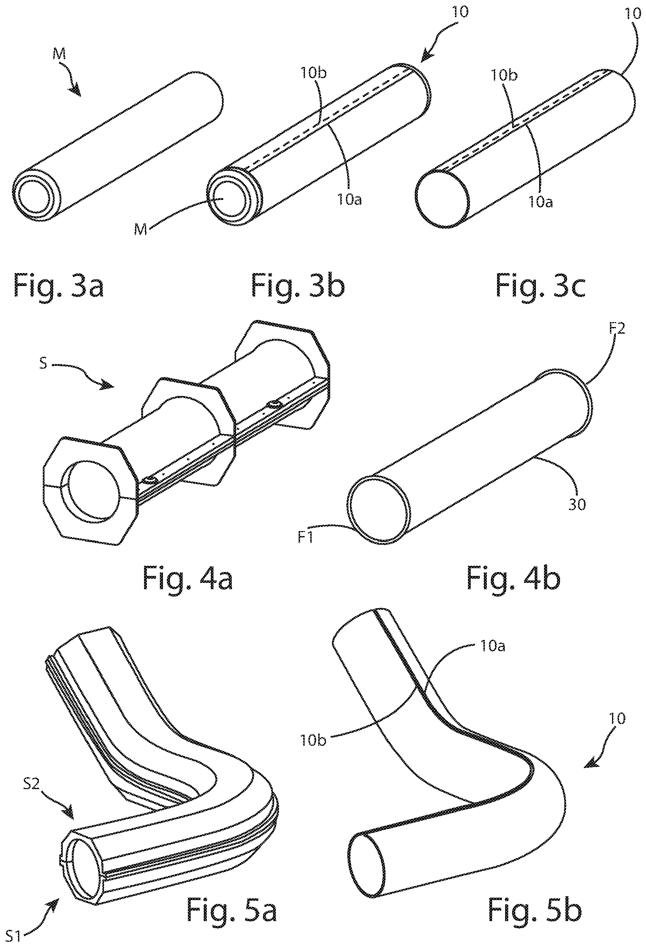

According to the second embodiment of the duct, the inner layer 10, as shown in Figure 5b and as will be described in detail below, has a longitudinal notch between the two edges 10a and 10b which will be useful in the manufacturing step of the duct 200 to favour and optimise the coupling between the layers.

As shown in the drawings, the multilayer tubular duct 100, 200 according to the invention further comprises an outer layer 30, also made of composite material.

In particular, the outer layer 30 has a thermosetting polymeric matrix to give structural consistency to the assembly, for example a bismaldehyde resin, or cyanate ester resins, or phenolic resin, or epoxy resin and a reinforcement based on carbon fiber or glass fiber.

According to an alternative embodiment, the outer layer 30 comprises a thermoplastic matrix, for example of the Polyether-ether-ketone (PEEK) type, fiber-reinforced with carbon or glass fibers which, thanks to the structure of the polymer, guarantees the maintenance of the strength characteristics both structural and chemical, even at high operating temperatures.

Preferably, the outer layer 30 comprises three, or four, pre-impregnated carbon fiber fabrics, superimposed on each other in the direction of the thickness of the pipe.

As shown in Figure 4b, according to the first embodiment of the duct 100, the layer 30 has a rectilinear tubular shape.

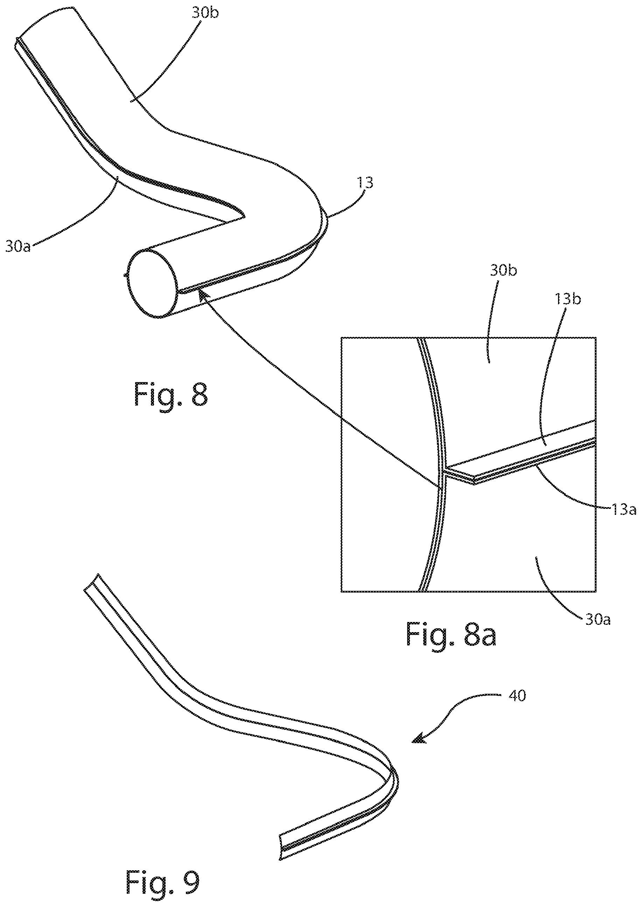

According to the second embodiment, shown in Figure 8, the outer layer 30 of the duct 200 has a curvilinear tubular shape and comprises a first 30a and a second 30b portion, coupled or which can be coupled to each other.

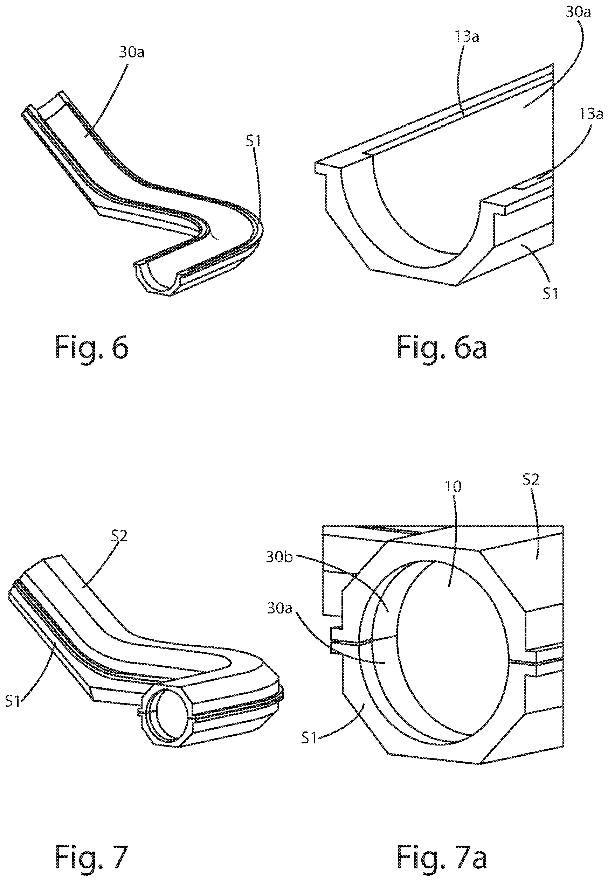

In particular, as shown in Figure 6a, the first portion 30a has a semi-circumference section and lateral edge flaps 13a.

Likewise, the second portion 30b has a semi-circumference section and lateral edge flaps 13b.

In an assembled configuration of the duct 200, the first 30a and the second 30b portions are coupled to each other at the lateral edge flaps 13a and 13b, to achieve the curvilinear tubular shape of the layer 30.

In order to ensure the seal at a longitudinal coupling edge between the first portion 30a and the second portion 30b of the outer layer 30, the duct 200 also has a ribbon-like sealing element 40, as shown in Figure 9.

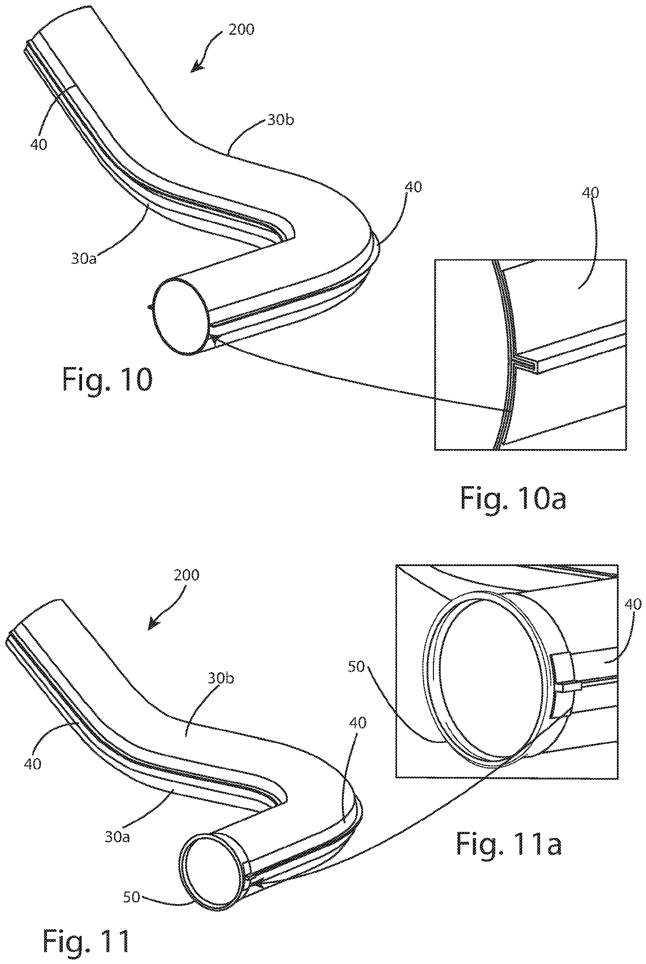

As shown in Figures 10 and 10a, a ribbon-like lateral sealing element 40 is applied, in particular by means of an adhesive resin, at each coupling between the edge flaps 13a and 13b.

In particular, the ribbon-like lateral sealing element 40 is made of a polymeric material chemically compatible with that of the outer layer 30, for example a composite material in carbon fiber and a matrix based on a thermosetting polymer, for example bismaldehyde resin, or cyanate esters, or phenolic resin, or epoxy resin.

In order to ensure the maintenance of the coupling between the portions 30a and 30b also at one end, the bleed duct 200 also has an end sealing element 50 shaped like a flange, as shown in Figures 11 and 11a.

In particular, the terminal sealing element 50 is applied, for example by means of an adhesive resin, at each end of said first 30a and second portion 30b in a coupling configuration.

The multilayer tubular duct 100, 200 according to the invention further comprises an intermediate adhesive layer 20 which is positioned between the inner layer 10 and the outer layer 30 and is configured to favour the coupling between the two above-mentioned layers.

In particular, as will be described in more below, the adhesive layer 20 is applied on a face of the inner layer 10.

For this reason, in order to increase the physical-chemical compatibility between the intermediate layer 20 and the support or application layer 10, an inorganic-based glue is used for the manufacture of the adhesive layer 20, which is compatible - both chemically and structurally - with the inner layer 10 of the duct.

Like the inner layer 10, the intermediate layer 20 is in fact preferably made with a ceramic-based matrix which has a percentage of residual porosity, for example between 16% and 21%.

Advantageously, the overall configuration of the multilayer bleed duct 100 according to the invention is such that a temperature gradient value between a tubular surface that defines a passageway for the exhaust gases and an outer surface of the duct, that is, a temperature difference between the inner and outer surface of the duct, measured along a radial thickness of the duct itself, is greater than or equal to 80°C, during an operating condition where the exhaust gases are released, allowing an increase in the useful life cycle of the duct itself. In fact, as mentioned above, using an inner thermal insulating layer 10, comprising a carbon fiber fabric as reinforcement, and an inorganic-based matrix, in particular ceramic-based, the inner layer 10 allows a thermal absorption of about 80°C between two faces, that is, between an inner face and an outer face, of the layer itself for 1 mm of thickness. The outer layer 30 moreover, as described in detail above, allows a further thermal absorption of between 20°C and 40°C. For this reason, advantageously, the invention guarantees the maintenance of an operating temperature equal to or less than 180°C for the structural part, that is, for the outer layer 30 made of composite material, during an operating condition of the duct, that is, during the passage in the inner face of the inner thermal insulating layer 10 of an exhaust gas characterised by a temperature of approximately 260°C.

The invention is also directed to a method of manufacturing the tubular bleed duct 100; 200 described above. The manufacturing method comprises the steps of:
(a) providing a pre-impregnated thermal insulating stratiform element 10 made of fiber-reinforced composite material with an inorganic matrix, comprising at least two edges 10a and 10b, substantially parallel to each other;
(b) providing at least a portion of tubular element (30), made of fiber-reinforced composite material, configured to structurally resist the fluid-dynamic mechanical stresses in an operating condition of an aircraft;
(c) applying the stratiform element 10 on an inner surface of the above-mentioned at least one portion of the tubular element 30, in which the applying step comprises the interposition of an intermediate adhesive layer 20 on an outer tubular surface of the stratiform element 10.

Advantageously, the pre-impregnated stratiform element 10 is shaped in a tubular manner by superposing or at least partial superposing along a longitudinal direction of the tubular surface of the two edges 10a and 10b.

According to the first embodiment of the multilayer tubular duct 100 according to the invention, the pre-impregnated inner layer 10 is shaped by means of a male mould, for example it is obtained by winding the pre-impregnated fabric around a cylindrical spindle M, as shown in the Figures 3a to 3c.

The outer layer 30 is made, by lamination, by superimposing at least two layers of carbon fiber fabric in a cylindrical mould, as shown in Figure 4a.

In particular, the mould used provides a circular recess near the ends, in such a way as to allow the formation of a cylinder 30 already provided with flange elements F1 and F2, as shown in Figure 4b.

The cylinder 30 is then subjected to a curing and post-curing process, before proceeding with the assembly with the inner layer 10.

As far as the manufacturing of the inner layer 10 is concerned, side edges 10a and 10b, opposite to each other, and preferably parallel, of the pre-impregnated material 10 are moved close to each other or superimposed on each other, depending on the specific diameter of the outer layer 30, to obtain a cylindrical pre-impregnated layer 10 substantially straight to be inserted in the outer layer 30.

Advantageously, in fact, once the impregnated fabric layer has been manufactured, it can be shaped according to the specific design shape and dimensions, allowing the diameter of the internal layer 10 to be adapted to the dimensions of the outer layer 30 of the multilayer bleed duct.

In addition to providing a structural advantage of adapting and sizing the inner layer to the design specifications, the characteristic configuration of the inner layer 10 advantageously allows to the times and costs of the tubular duct manufacturing process of the to be optimised.

The same pre-impregnated material 10 can in fact be used for making a plurality of shapes of tubular ducts.

Advantageously, the method according to the invention provides for a hybrid production process which can be automated, at least in part, or performed manually according to the specific project requirements and the number of tubular ducts to be produced.

As regards the manufacturing of the pre-impregnated tubular element 10, it is carried out through the use of a male mould and/or a female mould, which are used to guarantee the geometric precision of the product, that is to say, of the pipe.

The layout and positioning of the fabrics can be manual or automatic by means of a pre-impregnated positioning machine (fiber placement machine) to build different geometries of pipes, both straight and curved.

Once the superposed layers of carbon fiber fabric have been positioned, the ceramic-based resin described above is injected.

Advantageously, the recipe for the resin - that is to say, the percentage by weight of the various components - is managed by an electronic system that manages a gravimetric dispenser for the release of a certain percentage of material in relation to the specific weight of resin selected.

A mechanical mixer is also used, to ensure the homogeneity of the resin, which will feed an automatic impregnating machine.

The pre-impregnated material made with the above-mentioned ceramic-based resin is called AS-HT, and can be used as a standard pre-impregnated material, that is, suitable for being adapted and shaped to the design specifications of the tubular, straight or curved duct.

The pre-impregnated tubular element, also called preform, constituting the inner layer 10, is preferably formed by a stack of four layers of 200 gr/m² of pre-impregnated AS-HT.

The pre-impregnated tubular element 10 is polymerised in an autoclave: the curing preferably takes place in three phases.

A first phase, at a pressure of 3 bar (0,3 MPa) and at a temperature of approximately 80°C, has the purpose of stabilising the geometric conformation and stiffening the pre-impregnated tubular element 10.

A second phase, subsequent to the first, involves drying the element in a static oven at a temperature of about 80°C in an environment with inert gas, for example argon or nitrogen, for a time of approximately 12 hours, to allow the escape of residual water.

A third phase, to give the preform its thermal and mechanical properties, requires a curing in a high temperature oven (approximately 750°C) for approximately 30 minutes in an environment with inert gas, such as argon or nitrogen, to allow cross-linking of the ceramic matrix.

The AS-HT is a porous material and the manufacturing process itself can result in porosity of between 16% and 21%.

In order to reduce the losses in the tubular duct 100 which carries hot air under pressure, it is necessary to carry out a further process, namely the coupling between the preform constituting the inner layer 10 and the intermediate layer 20.

For this reason, an intermediate layer 20 is applied to the outer surface of the preform 10.

The intermediate layer is made by means of an inorganic-based glue, for example in a quantity equal to 200 gr/m², which is distributed on the outer surface of the preform 10, for example by means of a roller or brush.

Alternatively, for example in cases where it is necessary to contain the costs of the materials and production of the duct 100, the intermediate layer is made by means of a silicone adhesive with a quantity equal to 200 gr/m², which is distributed on the outer surface of the preform 10 for example by means of a roller or brush.

According to the first embodiment of the duct 100, the semi-finished product comprising the inner layer 10, and the intermediate adhesive layer 20 with an inorganic base, in particular ceramic, is placed under a vacuum, in a suitable vacuum bag, in order to eliminate the possible air accumulated during the application phase of the layer 20 on the preform of the AS-HT pre-impregnated tubular element 10.

Preferably, the intermediate adhesive layer 20 is applied in the form of an adhesive film. Alternatively, the intermediate adhesive layer 20 is made by applying a fluid ceramic-based glue with the spray up or air plasma spray system.

In particular, the intermediate layer 20 has a thickness of between 10µm and 60µm.

To allow an optimal coupling between the intermediate layer 20 and the AS-HT pre-impregnated tubular preform 10, the semi-finished product is inserted inside an autoclave, for a curing process, with a pressure value of 3 bar (0,3 MPa), at a temperature of 80°C, for a time of about 12 hours.

After the step of fixing the intermediate layer 20 of ceramic-based coating, the semi-finished product is extracted from the autoclave.

According to a preferred embodiment, the outer layer 30 has three layers of carbon fiber, or glass, and cyanate ester superimposed on each other, wherein each layer has a thickness of between 0.25 mm and 0.5 mm.

For this reason, according to the first embodiment of the duct 100, the outer layer 30 appears as a laminate with perfect airtightness and uniform mechanical behaviour which attenuates the temperature value of the air leaving the engines passing through the duct in an operational condition.

Advantageously, it is possible to use a pre-impregnated carbon fiber with thermosetting or thermoplastic matrices.

In particular, the thermosetting matrix used in the composite material of the outer layer 30 according to a preferred embodiment of the tubular duct described here is a cyanate ester resin with a glass transition temperature (Tg) greater than 315°C.

For this reason, at the operating temperatures of the tubular duct in an operating phase, the structural integrity of the outer layer 30 is also guaranteed (which is stressed at a temperature of about 180°C and a pressure value of about 30 bar (3 MPa)).

Validation of the design was carried out by producing prototypes and testing the performance.

An FST (Fire Smoke and Toxicity) test was performed which showed values with an order of magnitude lower than that specified by the requirements generally required in the aeronautical sector.

Thermal and structural analyses were performed using finite element models (for example Nastran).

The analysed tubular duct shows a thickness of about 1-1.2 mm for the outer layer 30 (cyanate ester) and a thickness of 1 mm for the preformed AS-HT material of the inner layer 10, while the thickness of the intermediate layer 20, for example made as a ceramic-based adhesive laminar film element, has a thickness of between 20-30 µm.

A total thickness of the tubular duct 100 of approximately 2.3 mm was therefore identified. The link between the layers was studied.

Static mechanical tests were carried out which show that bond failure occurs between the outer layer 30 and the inner layer 10 at the intermediate layer 20, in line with the FEM analysis.

A test was performed to verify the pressure at which the pipe bursts and that pressure is 40 bar (4 MPa).

A comparison was made in terms of weight finding the following:
- the density of the AS-HT pre-impregnated material is approximately 1.25 kg/cm³, the density of the outer layer of carbon fiber and cyanate ester is approximately 1.5 kg/cm³, the density of the adhesive ceramic-based layer 1.1 kg/cm³;
- the density of the titanium alloy is, on the other hand, equal to approximately 4.5 g/cm³.

The titanium alloy pipe is made with 0.8 mm thick sheets.

For this reason, for a straight pipe, for example, with an area of 1 m², the weight saving is 18%.

The prototypes meet the requirements in terms of pressure and leakage containment and thermal behaviour.

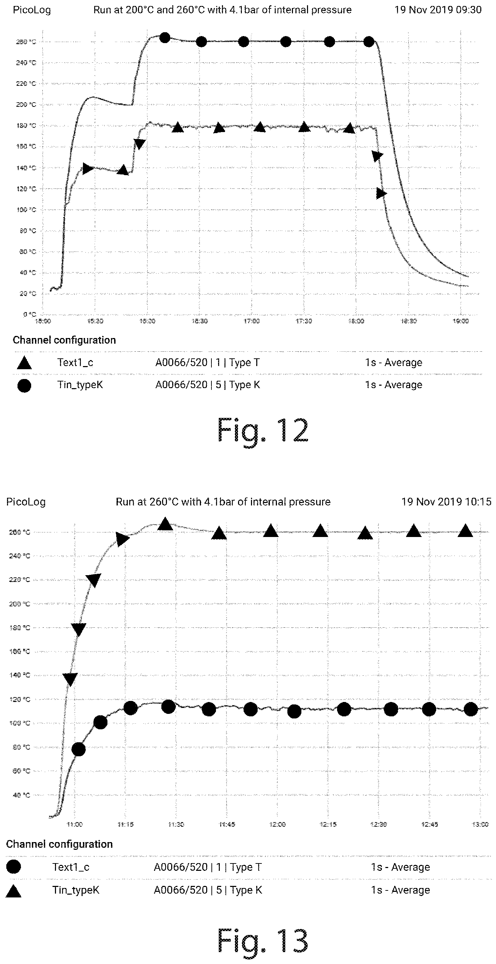

Figures 12 and 13 give evidence of the verification test of the thermal performance of the ducts under pressure and with the internal air at temperature.

In particular, these graphs show the thermal behaviour of the bleed duct with an internal air pressure of 4.2 Atm (0,426 MPa) and classic service temperatures which, as required by GENOPS, are 200°C up to 260°C.

The graph in Figure 12 shows the external temperature curve compared to an internal temperature of 200 and 260°C and 4.1 atmospheres (0,415 MPa) of internal pressure.

The graph in Figure 13 shows the external temperature of the pipe insulated with 5 mm of glass fiber and a coating to contain the insulation made with 0.5 mm of carbon fiber pre-impregnated with a cyanate ester matrix against an internal temperature of 200 and 260°C and 4.1 atmospheres (0,415 MPa) of internal pressure.

In the hypothesis that the external temperature of the pipe is to be kept within 120°C when the internal temperature is 260°C with a pressure of 4 bar (0,4 MPa), it is necessary to wrap the pipe with an insulator with a thermal conductivity such as to reduce the temperature from 180°C at 120°C in a thickness of 5 mm.

An outer tubular layer 30 made of carbon fiber or glass fiber is then manufactured (by using pre-impregnated fabrics) with the above-mentioned matrices with a thickness between 0.8 mm and 1.5 mm and is inserted above the pre-impregnated tubular element 10 made of AS-HT which acts as an insulator.

The pre-cured outer pipe 30 prevents the passage of the hot air and has structural functions.

The difficulties of this pipe in pipe determined by the tolerances that the two pipes would have required in order to be inserted into each other have been overcome by making the inner pipe from AS HT with the function of thermal insulation, with a notch along the longitudinal axis and a diameter such that once inserted inside the outer pipe, which has structural functions, two edges of the inner pipe superpose by means of a scaled overlapping. All of the above for straight pipes.

For the manufacture of curvilinear ducts, the production process according to the invention, defined as pipe in pipe, with both the pipes manufactured separately, can be reproduced except that the outer layer will be constructed in two halves as described below.

As shown in Figure 6a, the first portion 30a has a semi-circumference section and lateral edge flaps 13a and is obtained by lamination in a respective female half-mould.

Likewise, the second portion 30b is obtained, which has a semi-circumference section and lateral edge flaps 13b by lamination in a further female half-mould.

The material used for making the portions 30a and 30b is the same as that described above with reference to the layer 30 of the first embodiment of the duct according to the invention.

The pre-impregnated tubular element, also called preform, constituting the inner layer 10, is preferably formed by a stack of 4 layers of 200 gr/m² of pre-impregnated AS-HT.

In order to ensure that a separation gap is maintained between the end edges 10a and 10b of the inner layer 10, even after the curing steps of the pre-impregnated element, a sheet of non-stick material, for example Teflon, is provided at the edges themselves.

The pre-impregnated curvilinear tubular element 10 is then polymerised in an autoclave: the curing preferably takes place in three steps, as described with reference to the first embodiment described above.

In particular, the pre-impregnated curvilinear tubular element 10 therefore appears as a longitudinally open tubular element also at the end of the curing steps.

Advantageously, the longitudinal notch between the two edges 10a and 10b is useful in the construction phase of the duct 200 to favour and optimise the coupling of the inner layer with respect to the outer layer 30.

In fact, once the two halves of the outer pipe have been manufactured, the inner tubular layer is introduced, with the function of thermal insulation, manufactured with a ceramic matrix.

This insulating pipe has a diameter cut along the longitudinal axis.

An outer surface of the internal tubular element 10 is coated with a structural adhesive and then inserted into one half of the outer pipe, that is, in the first portion 30a, inserted in the female half-mould S1.

Advantageously, the longitudinal opening of the inner tubular element 10 allows the coupling to be optimised between the outer surface of the tubular element 10 and the first portion 30a also at bending regions of the half-mould S1.

The second portion 30b, and the female half-mould S2, are then positioned on the first portion 30a, contained in the respective female half-mould S1, to proceed with the coupling between the lateral edge flaps 13a and 13b, as shown in Figure 7a.

The mould is then closed and a vacuum bag is applied internally and externally to the mould.

As shown in Figures 10 and 11, once the inner tubular layer 10 has been encapsulated inside the outer layer 30 (pipe in pipe) in order to ensure a perfect air tightness under pressure, the method according to the invention comprises a step of applying a ribbon-like lateral sealing element 40 at each coupling between the edge flaps 13a and 13b.

In particular, the ribbon-like lateral sealing element 40 is made for example with a thermosetting matrix adhesive, or a thermosetting film adhesive, for example bismaldehyde resin.

The duct comprising the ribbon-like lateral sealing elements 40 is then repositioned in the autoclave in a vacuum bag, for example at 3 Atm (0,304 MPa) and 80°C.

In order to ensure that the coupling is maintained between the portions 30a and 30b also at one end, a terminal sealing element 50 shaped like a flange is applied.

In particular, the terminal sealing element 50 is applied, for example by means of a structural adhesive, at each end of said first 30a and second portion 30b in a coupling configuration.

To cite some examples of use, this type of pipe was developed for the system of conduits of the air that is bled from the engines (high temperature pressurised fluids, greater than 260°C) to allow the defrosting of the leading edge of the wings, the lip of the nacelle that contains the engines to condition the aircraft.

Advantageously, the tubular duct described here meets the following requirements for the pipes of an air duct system:
- No loss of hot fluids under pressure from 0 to 4.1 bar (0,41 MPa) (with a burst up to 14.75 bar (1,475 MPa));
- No permanent deformation or failure at the operating temperature and pressure;
- Operating temperature from -55°C to 300°C;
- No weight loss, no degassing, no degradation of the pipe characteristics during its service life;
- Thermal and mechanical stability in the range of service conditions;
- FST according to EN45545-2 (being more conservative than the aerospace standards), ISO 5659-2, ISO 5658-2, ISO 5660-1;
- Composite tolerances of the pipe produced;
- Withstands mechanical loads during the service life.

The invention is described by way of example only, without limiting the scope of application, according to a preferred embodiment, but it shall be understood that the invention may be modified and/or adapted by experts in the field without thereby departing from the scope of the inventive concept, as defined in the claims herein.

## Claims

1. A multilayer bleed duct (100; 200), configured to direct a flow of exhaust gas from an aircraft, the duct comprising:
- an inner thermal insulating layer (10) having a tubular surface which defines a passageway for the exhaust gases, said inner layer being made of inorganic matrix fiber-reinforced composite material, said inner layer (10) comprising at least two edges (10a) and (10b), substantially parallel to each other, superposing or at least partially superposing along a longitudinal direction of the tubular surface;
- an outer layer (30) having a rigid tubular surface configured to structurally resist the fluid dynamic mechanical stresses in an operating condition of the aircraft, said outer layer (30) being made of fiber-reinforced composite material;
- an intermediate adhesive layer (20) positioned between said inner layer (10) and said outer layer (30) said intermediate adhesive layer (20) having an inorganic base, configured to allow a structural continuity between said inner layer (10) and said outer layer (30),
the overall configuration of the multilayer bleed duct (100; 200) being such that a temperature gradient value between a tubular surface that defines a passageway for the exhaust gases and an outer surface of the duct, that is, a temperature difference between the inner and outer surface of the duct, measured along a radial thickness of the duct itself, is greater than or equal to 80 °C during an operating condition where the exhaust gases are released.

2. The bleed duct (100; 200) according to the preceding claim, wherein said inorganic matrix fiber-reinforced composite material of said inner thermal insulating layer (10), comprises at least one carbon fiber fabric impregnated with a ceramic-based resin, and is configured to allow a thermal absorption, between an inner face and an outer face of said inner thermal insulating layer (10) of about 80 °C for 1 mm of thickness.

3. The bleed duct (100; 200) according to any one of the preceding claims, wherein said intermediate adhesive layer (20) is made of polymeric material comprising a polyamide resin, optionally bismaldehyde.

4. The bleed duct (100; 200) according to any one of the preceding claims, wherein said intermediate adhesive layer (20) has a thickness of between 10µm and 60µm.

5. The bleed duct (100) according to any one of the preceding claims, wherein said outer layer (30) is cylindrical in shape.

6. The bleed duct (200) according to any one of claims 1 to 4, wherein said outer layer comprises a first portion (30a) and a second portion (30b), said first portion (30a) and said second portion (30b) being coupled or couplable to each other.

7. The bleed duct (200) according to the preceding claim, wherein each of said first portion (30a) and second portion (30b) has a semi-circumference section and lateral edge flaps (13a; 13b).

8. The bleed duct (200) according to the preceding claim, wherein said outer layer (30) comprises a ribbon-like lateral sealing element (40) at a longitudinal coupling edge between said first portion (30a) and said second portion (30b).

9. The bleed duct (200) according to any one of the previous claims, comprising a flanged reinforcement element (50) at each terminal end of said first portion (30a) and said second portion (30b) in a coupling configuration.

10. A method for manufacturing a bleed duct (100; 200) according to any one of claims 1 to 8, comprising the steps of:
(a) providing a thermal insulating, pre-impregnated stratiform element (10) made of fiber-reinforced composite material with an inorganic matrix, said inner layer (10) comprising at least two edges (10a) and (10b), substantially parallel to each other;
(b) providing at least a portion of tubular element (30), made of fiber-reinforced composite material, configured to structurally resist the fluid-dynamic mechanical stresses in an operating condition of an aircraft;
(c) applying said stratiform element (10) on an inner surface of said at least one portion of tubular element (30),
wherein said step of applying comprises the interposition of an intermediate adhesive layer (20) on a tubular outer surface of said stratiform element (10), said tubular outer surface being made by superposing or at least partial superposing along a longitudinal direction of the tubular surface of said two edges (10a) and (10b).

11. The method for manufacturing a bleed duct (100) according to the preceding claim, further comprising a rolling step for making said straight cylindrical tubular element (30).

12. The method for manufacturing a bleed duct (200) according to claim 10, further comprising a coupling step of a first portion (30a) and a second portion (30b), having a semi-circular cross-section, to make said tubular element (30) curvilinear.

## Patentansprüche

1. Mehrschichtiger Anzapfkanal (100; 200), der so konfiguriert ist, dass er einen Abgasstrom aus einem Flugzeug leitet, wobei der Kanal Folgendes umfasst:
- eine innere wärmeisolierende Schicht (10) mit einer röhrenförmigen Oberfläche, die einen Durchgang für die Abgase definiert, wobei die innere Schicht aus faserverstärktem Verbundmaterial mit anorganischer Matrix hergestellt ist, wobei die innere Schicht (10) mindestens zwei im Wesentlichen parallele Kanten (10a) und (10b) aufweist, die sich entlang einer Längsrichtung der röhrenförmigen Oberfläche überlagern oder zumindest teilweise überlagern;
- eine äußere Schicht (30) mit einer starren röhrenförmigen Oberfläche, die so konfiguriert ist, dass sie den strömungsdynamischen mechanischen Beanspruchungen in einem Betriebszustand des Flugzeugs strukturell widersteht, wobei die äußere Schicht (30) aus faserverstärktem Verbundmaterial hergestellt ist;
- eine klebende Zwischenschicht (20), die zwischen der inneren Schicht (10) und der äußeren Schicht (30) angeordnet ist, wobei die klebende Zwischenschicht (20) eine anorganische Basis aufweist, die so gestaltet ist, dass sie eine strukturelle Kontinuität zwischen der inneren Schicht (10) und der äußeren Schicht (30) ermöglicht,
wobei die Gesamtkonfiguration des mehrschichtigen Anzapfkanals (100; 200) derart ist, dass ein Temperaturgradientwert zwischen einer rohrförmigen Oberfläche, die einen Durchgang für die Abgase definiert, und einer äußeren Oberfläche des Kanals, d.h. eine Temperaturdifferenz zwischen der inneren und der äußeren Oberfläche des Kanals, gemessen entlang einer radialen Dicke des Kanals selbst, während eines Betriebszustands, in dem die Abgase freigesetzt werden, größer als oder gleich 80°C ist.

2. Anzapfkanal (100; 200) nach dem vorhergehenden Anspruch, wobei das mit anorganischen Matrixfasern verstärkte Verbundmaterial der inneren Wärmedämmschicht (10) mindestens ein mit einem Harz auf Keramikbasis imprägniertes Kohlenstofffasergewebe umfasst und so konfiguriert ist, dass es eine Wärmeabsorption zwischen einer Innenfläche und einer Außenfläche der inneren Wärmedämmschicht (10) von etwa 80°C bei einer Dicke von 1 mm ermöglicht.

3. Anzapfkanal (100; 200) nach einem der vorhergehenden Ansprüche, wobei die Zwischenklebeschicht (20) aus einem polymeren Material hergestellt ist, das ein Polyamidharz, gegebenenfalls Bismaldehyd, umfasst.

4. Anzapfkanal (100; 200) nach einem der vorangehenden Ansprüche, wobei die Zwischenklebeschicht (20) eine Dicke zwischen 10µm und 60µm aufweist.

5. Anzapfkanal (100) nach einem der vorangehenden Ansprüche, wobei die äußere Schicht (30) eine zylindrische Form hat.

6. Anzapfkanal (200) nach einem der Ansprüche 1 bis 4, wobei die Außenschicht einen ersten Abschnitt (30a) und einen zweiten Abschnitt (30b) umfasst, wobei der erste Abschnitt (30a) und der zweite Abschnitt (30b) miteinander gekoppelt oder koppelbar sind.

7. Anzapfkanal (200) nach dem vorhergehenden Anspruch, wobei sowohl der erste Abschnitt (30a) als auch der zweite Abschnitt (30b) einen Halbumfangsabschnitt und seitliche Kantenlaschen (13a; 13b) aufweisen.

8. Anzapfkanal (200) nach dem vorhergehenden Anspruch, wobei die äußere Schicht (30) ein bandförmiges seitliches Dichtungselement (40) an einer Längskopplungskante zwischen dem ersten Abschnitt (30a) und dem zweiten Abschnitt (30b) aufweist.

9. Anzapfkanal (200) nach einem der vorhergehenden Ansprüche, mit einem geflanschten Verstärkungselement (50) an jedem Anschlussende des ersten Abschnitts (30a) und des zweiten Abschnitts (30b) in einer Kupplungskonfiguration.

10. Verfahren zur Herstellung eines Anzapfkanals (100; 200) nach einem der Ansprüche 1 bis 8, das die folgenden Schritte umfasst:
(a) Bereitstellen eines wärmeisolierenden, vorimprägnierten schichtförmigen Elements (10) aus faserverstärktem Verbundmaterial mit einer anorganischen Matrix, wobei die innere Schicht (10) mindestens zwei im Wesentlichen parallel zueinander verlaufende Kanten (10a) und (10b) aufweist;
(b) Bereitstellen mindestens eines Teils eines rohrförmigen Elements (30) aus faserverstärktem Verbundmaterial, das so konfiguriert ist, dass es den fluiddynamischen mechanischen Beanspruchungen in einem Betriebszustand eines Flugzeugs strukturell widersteht;
(c) Aufbringen des schichtförmigen Elements (10) auf eine Innenfläche des mindestens einen Abschnitt des rohrförmigen Elements (30),
wobei der Schritt des Aufbringens das Einfügen einer Zwischenklebeschicht (20) auf einer röhrenförmigen Außenfläche des schichtförmigen Elements (10) umfasst, wobei die röhrenförmige Außenfläche durch Übereinanderlegen oder zumindest teilweises Übereinanderlegen entlang einer Längsrichtung der röhrenförmigen Oberfläche der beiden Kanten (10a) und (10b) hergestellt wird.

11. Verfahren zur Herstellung eines Anzapfkanals (100) nach dem vorhergehenden Anspruch, das ferner einen Walzschritt zur Herstellung des geraden zylindrischen rohrförmigen Elements (30) umfasst.

12. Verfahren zur Herstellung eines Anzapfkanals (200) nach Anspruch 10, das ferner einen Schritt des Verbindens eines ersten Abschnitts (30a) und eines zweiten Abschnitts (30b) mit halbkreisförmigem Querschnitt umfasst, um das rohrförmige Element (30) krumm zu machen.

## Revendications

1. Conduit de purge multicouche (100; 200), configuré pour diriger un flux de gaz d'échappement d'un aéronef, le conduit comprenant:
- une couche interne d'isolation thermique (10) ayant une surface tubulaire qui définit un passage pour les gaz d'échappement, ladite couche interne étant constituée d'un matériau composite renforcé de fibres à matrice inorganique, ladite couche interne (10) comprenant au moins deux bords (10a) et (10b), sensiblement parallèles l'un à l'autre, se superposant ou se superposant au moins partiellement le long d'une direction longitudinale de la surface tubulaire;
- une couche extérieure (30) ayant une surface tubulaire rigide configurée pour résister structurellement aux contraintes mécaniques de la dynamique des fluides dans un état d'exploitation de l'aéronef, ladite couche extérieure (30) étant constituée d'un matériau composite renforcé par des fibres;
- une couche adhésive intermédiaire (20) placée entre ladite couche intérieure (10) et ladite couche extérieure (30), ladite couche adhésive intermédiaire (20) ayant une base inorganique, configurée pour permettre une continuité structurelle entre ladite couche intérieure (10) et ladite couche extérieure (30),
la configuration globale du conduit de purge multicouche (100; 200) est telle qu'une valeur de gradient de température entre une surface tubulaire qui définit un passage pour les gaz d'échappement et une surface extérieure du conduit, c'est-à-dire une différence de température entre la surface intérieure et la surface extérieure du conduit, mesurée le long d'une épaisseur radiale du conduit lui-même, est supérieure ou égale à 80°C pendant un état de fonctionnement où les gaz d'échappement sont libérés.

2. Conduit de purge (100; 200) selon la revendication précédente, dans lequel ledit matériau composite renforcé par des fibres à matrice inorganique de ladite couche d'isolation thermique intérieure (10) comprend au moins un tissu de fibres de carbone imprégné d'une résine à base de céramique, et est configuré pour permettre une absorption thermique, entre une face intérieure et une face extérieure de ladite couche d'isolation thermique intérieure (10), d'environ 80°C pour 1 mm d'épaisseur.

3. Conduit de purge (100; 200) selon l'une quelconque des revendications précédentes, dans lequel ladite couche adhésive intermédiaire (20) est constituée d'un matériau polymère comprenant une résine polyamide, éventuellement bismaldéhyde.

4. Conduit de purge (100; 200) selon l'une quelconque des revendications précédentes, dans lequel ladite couche adhésive intermédiaire (20) a une épaisseur comprise entre 10pm et 60µm.

5. Conduit de purge (100) selon l'une quelconque des revendications précédentes, dans lequel ladite couche externe (30) est de forme cylindrique.

6. Conduit de purge (200) selon l'une quelconque des revendications 1 à 4, dans lequel ladite couche externe comprend une première partie (30a) et une seconde partie (30b), ladite première partie (30a) et ladite seconde partie (30b) étant couplées ou couplables l'une à l'autre.

7. Conduit de purge (200) selon la revendication précédente, dans lequel chacune de ces première partie (30a) et deuxième partie (30b) a une section de demi-circonférence et des rabats de bord latéral (13a; 13b).

8. Conduit de purge (200) selon la revendication précédente, dans lequel ladite couche extérieure (30) comprend un élément d'étanchéité latéral en forme de ruban (40) au niveau d'un bord d'accouplement longitudinal entre ladite première partie (30a) et ladite seconde partie (30b).

9. Conduit de purge (200) selon l'une quelconque des revendications précédentes, comprenant un élément de renforcement à bride (50) à chaque extrémité terminale de ladite première partie (30a) et de ladite seconde partie (30b) dans une configuration d'accouplement.

10. Procédé de fabrication d'un conduit de purge (100; 200) selon l'une quelconque des revendications 1 à 8, comprenant les étapes suivantes:
(a) fournir un élément stratiforme préimprégné et isolant thermique (10) en matériau composite renforcé de fibres avec une matrice inorganique, ladite couche interne (10) comprenant au moins deux bords (10a) et (10b), sensiblement parallèles l'un à l'autre;
(b) fournir au moins une partie de l'élément tubulaire (30), en matériau composite renforcé de fibres, configuré pour résister structurellement aux contraintes mécaniques fluido-dynamiques dans un état de fonctionnement d'un aéronef;
(c) appliquer ledit élément stratiforme (10) sur une surface intérieure de ladite au moins une partie de l'élément tubulaire (30),
dans laquelle ladite étape d'application comprend l'interposition d'une couche adhésive intermédiaire (20) sur une surface extérieure tubulaire dudit élément stratiforme (10), ladite surface extérieure tubulaire étant réalisée par superposition ou superposition au moins partielle, le long d'une direction longitudinale de la surface tubulaire, desdits deux bords (10a) et (10b).

11. Procédé de fabrication d'un conduit de purge (100) selon la revendication précédente, comprenant en outre une étape de laminage pour réaliser ledit élément tubulaire cylindrique droit (30).

12. Procédé de fabrication d'un conduit de purge (200) selon la revendication 10, comprenant en outre une étape de couplage d'une première portion (30a) et d'une seconde portion (30b), de section semi-circulaire, pour rendre ledit élément tubulaire (30) curviligne.
